# EUROPEAN PATENT APPLICATION

(11) **EP 1 341 016 A2**
(43) Date of publication of application: **03.09.2003**
(21) Application number: 03250554.7
(22) Date of filing: 29.01.2003
(51) Int. Cl.: G02B 6/38

(54) **Optical fiber array**

(30) Priority: 30.01.2002 US 60533
(71) Applicant: Chiaro Networks Ltd., Jerusalem 95484 (IL)
(72) Inventor: Geron, Amir, Modiin (IL); Shekel, Eyal, Jerusalem 92541 (IL)
(74) Representative: Evens, Paul Jonathan

(57) **Abstract**

An improved linear polarization maintaining optical fiber array and a method of making the array are disclosed. The fibers (14) of the array are seated in V-grooves (40) formed in two silicon plates (42,44), which are then approximated and bonded together to hold the fibers (14) securely therebetween. The terminal portions (20) of the fibers (14) are disposed in alumina, glass or zirconium ferrules (22), which protect the fibers (14) from distortion and thus increased loss, caused by asymmetric external pressure of the housing. Using the method of manufacture disclosed herein, it is possible to test each fiber prior to its incorporation in the array.

## Description

### FIELD OF THE INVENTION

This invention relates to the manufacture of optical assemblies, particularly to the manufacture of an array of optical fibers.

### BACKGROUND OF THE INVENTION

In the past, the assembly and manufacture of optical assemblies having a linear array of optical elements has been time consuming and prone to quality control problems. The latest developments in optical cross-connect assemblies have only magnified these problems. Precisely engineered optical receiver arrays are required in these devices. A general demand for more precisely constructed assemblies having greater reliability has translated into a demand for better manufacturing apparatus and processes.

Optical devices of the type addressed by the present invention currently in use involve an array of polarization maintaining optical fibers. Optimizing the alignment of the polarization maintaining optical fibers has heretofore been a tedious, labor intensive process. Satisfactory extinction ratios have been difficult to achieve reliably, and the non-uniformity of the extinction ratios among the fiber elements of the array has been difficult to control.

The manufacturing processes used heretofore cause distortion of the terminal segment of the optical fibers, and thereby affect the delicate alignment of the polarization axes of individual fibers and their extinction ratios. As a result, there is degradation in the performance of the optical assembly.

### SUMMARY OF THE INVENTION

The present invention seeks to provide an improved array of polarization maintaining optical fibers in which the polarization axes of the fibers are aligned, as well as an improved system and methodology for manufacturing an improved array of polarization maintaining optical fibers in which the polarization axes of the fibers are aligned.

There is thus provided, in accordance with a preferred embodiment of the present invention, a fiberoptic array, including a housing, a plurality of optical fibers and a plurality of ferrules fixed within the housing, each of the ferrules ensheathing a terminal segment of an associated one of the optical fibers.

There is additionally provided, in accordance with a preferred embodiment of the present invention, a fiberoptic array, including a housing, a plurality of polarization maintaining optical fibers and a plurality of ferrules fixed within the housing, each of the ferrules ensheathing a terminal segment of an associated one of the polarization maintaining optical fibers and being in circumferential contact with an outer wall of the associated polarization maintaining optical fiber.

Preferably, the housing includes a top plate and a bottom plate, the ferrules being disposed therebetween. Alternatively, the housing includes a single plate having a plurality of holes bored therethrough, the ferrules being disposed in the holes. As another alternative the housing includes only a single plate.

In accordance with a preferred embodiment of the present invention, a plurality of first V-grooves are formed in the top plate and a plurality of second V-grooves are formed in the bottom plate, the ferrules being in contact with an associated first V-groove and an associated second V-groove. Alternatively, a plurality of V-grooves are formed in the bottom plate, the ferrules being in contact with an associated V-groove.

Preferably, the ferrules are fixed to the optical fibers. A tip portion of each of ferrules is preferably tapered.

In accordance with a preferred embodiment of the present invention, the optical fibers are polarization maintaining optical fibers. Additionally, the polarization axes of the polarization maintaining optical fibers preferably have an identical orientation.

There is further provided, in accordance with a preferred embodiment of the present invention, a fiberoptic array, including at least one optical fiber, at least one ferrule, enclosing an end of a corresponding one of the at least one optical fiber and a V-groove support for the at least one ferrule.

Preferably, the ferrules are fixed to the optical fibers. A tip portion of each of ferrules is preferably tapered.

In accordance with a preferred embodiment of the present invention, the optical fiber includes polarization maintaining optical fiber.

There is yet further provided, in accordance with a preferred embodiment of the present invention, a methodology for manufacturing a fiberoptic array, including inserting terminal portions of a plurality of polarization maintaining optical fibers in associated tip portions of a plurality of ferrules, fixing an outer wall of each of the polarization maintaining optical fibers to an interior portion of an associated ferrule and securing the ferrules in a housing.

There is still further provided, in accordance with a preferred embodiment of the present invention, a methodology for manufacturing a fiberoptic array, including inserting terminal portions of a plurality of optical fibers into associated tip portions of a plurality of ferrules, fixing an outer wall of each of the optical fibers to an interior portion of an associated ferrule and securing the ferrules in a housing.

Preferably, the ferrules each have a tapered end, and end faces of the polarization maintaining optical fibers are inserted via the tapered end of an associated ferrule.

Preferably, the methodology also includes disposing polarization axes of the polarization maintaining optical fibers in identical orientations.

In accordance with a preferred embodiment of the present invention, the methodology for securing the ferrules also includes forming a plurality of V-grooves in a bottom plate and disposing each of the ferrules in an associated V-groove. Additionally, the methodology for securing the ferrules also includes adhering the bottom plate to a top plate. Additionally or alternatively, the methodology for securing the ferrules also includes forming a plurality of first V-grooves in a top plate, forming a plurality of second V-grooves in a bottom plate, disposing each of the polarization maintaining optical fibers in an associated first V-groove and an associated second V-groove; and adhering the top plate to the bottom plate.

Additionally or alternatively, the methodology also includes polishing end faces of the polarization maintaining optical fibers and end faces of the ferrules until the end faces of the polarization maintaining optical fibers are flush with the end faces of the ferrules.

### BRIEF DESCRIPTION OF THE DRAWINGS

The present invention will be understood and appreciated more fully from the following detailed description, taken in conjunction with the drawings in which:

Fig. 1 is an optical fiber being prepared for insertion into a fiberoptic array constructed and operative in accordance with a preferred embodiment of the invention;

Fig. 2 is an optical fiber being prepared for insertion into a fiberoptic array constructed and operative in accordance with a preferred embodiment of the invention;

Fig. 3A is an optical fiber disposed within a ferrule in accordance with a preferred embodiment of the invention;

Fig. 3B is a sectional illustration of a portion of an optical fiber disposed within a ferrule, in accordance with a preferred embodiment of the present invention;

Fig. 4 is a portion of a fiberoptic array constructed and operative in accordance with a preferred embodiment of the invention;

Fig. 5A is a portion of a fiberoptic array constructed and operative in accordance with a preferred embodiment of the invention;

Fig. 5B is a sectional illustration of portion of a fiberoptic array constructed and operative in accordance with a preferred embodiment of the invention; and

Fig. 6 is a sectional illustration of portion of a fiberoptic array constructed and operative in accordance with a preferred embodiment of the invention.

### DETAILED DESCRIPTION OF PREFERRED EMBODIMENTS

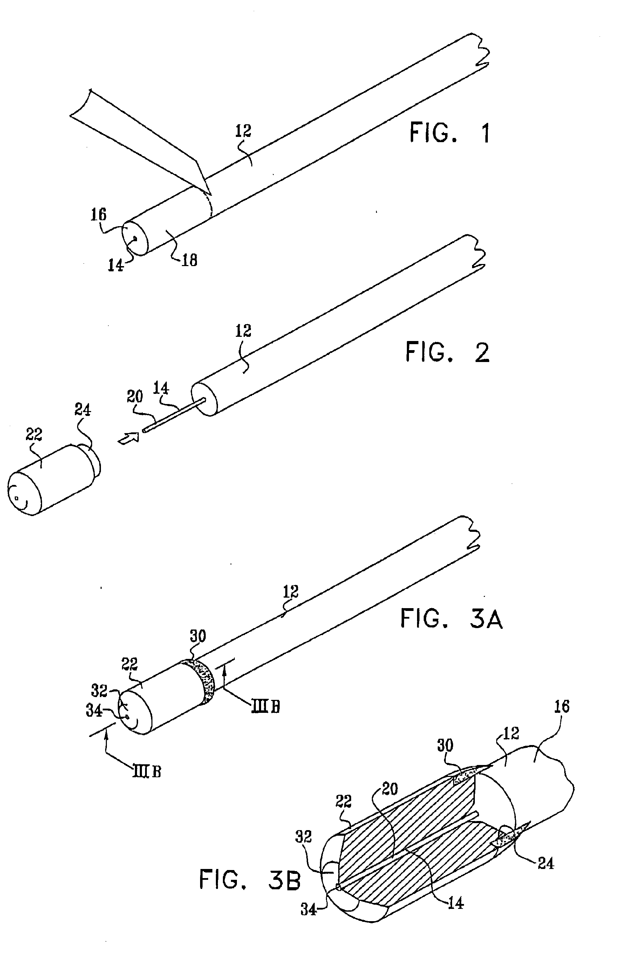

Reference is now made to Figs. 1, 2, 3A & 3B which illustrate the preparation of an optical fiber cable 12 for insertion into a fiberoptic array in accordance with a preferred embodiment of the present invention. As seen in Fig. 1, optical fiber cable 12 includes an optical fiber 14 and a jacket 16, with an end portion 18 of the jacket 16 being removed.

Fig. 2 illustrates the insertion of an end portion 20 of the optical fiber 14 into a ferrule 22, in accordance with a preferred embodiment of the present invention. Preferably, the optical fiber 14 is a polarization maintaining optical fiber, such as Panda type optical fiber, preferably PureMode™ optical fiber commercially available from Coming, Inc. of the U.S.A., whose performance and optical characteristics are extremely sensitive to pressure applied thereto.

As seen in Fig. 3B, a tip portion 24 of the ferrule 22 is preferably tapered. The tapering angle is selected to enhance ease of insertion of the end portion 20 of the optical fiber 14 therein. In accordance with a preferred embodiment of the present invention, the end portion 20 of optical fiber 14, typically having a circularly cylindrical configuration, is encased by ferrule 22 having a complementary circular inner cross-section. The ferrule 22 is relatively stiff, and its inner wall provides broad areas of contact with the outer wall of the end portion 20 of optical fiber 14. The ferrule 22 serves to uniformly distribute any external pressure about the circumference of the end portion 20 of the optical fiber 14. The ferrule 22 may be constructed from any suitable material, such as zirconium, alumina, or glass.

Fig. 3A illustrates the optical fiber cable 12 fixed to the ferrule 22 by an adhesive joint 30, preferably employing Hysol® 0151, commercially available from Dexter Corporation, One Dexter Drive, Seabrook, N.H., U.S.A.

Fig. 3B illustrates the end of the jacket 16 fixed with respect to the tip portion 24 of the ferrule 22 by the adhesive joint 30. Additionally, the end portion 20 of optical fiber 14 is preferably fixed with respect to the inside of the ferrule 22 by a relatively thin layer of adhesive (not shown), typically a layer of thickness up to 2 microns of an adhesive, preferably TRA-BOND F123, commercially available from TRA-CON, Inc., 45 Wiggins Ave., Bedford, MA., U.S.A. Other suitable techniques of fixing end portion 20 of the optical fiber 14 and the jacket 16 to the ferrule 22 may alternatively be employed.

Preferably, following insertion of the end portion 20 of the optical fiber 14 into the ferrule 22, via the tip portion 24 thereof, an end portion 32 of the ferrule 22, opposite to the tip portion 24, and an end face 34 of the optical fiber 14 are polished together, so that a portion of the end portion 32 of the ferrule 22 becomes flush with the end face 34 of the optical fiber 14.

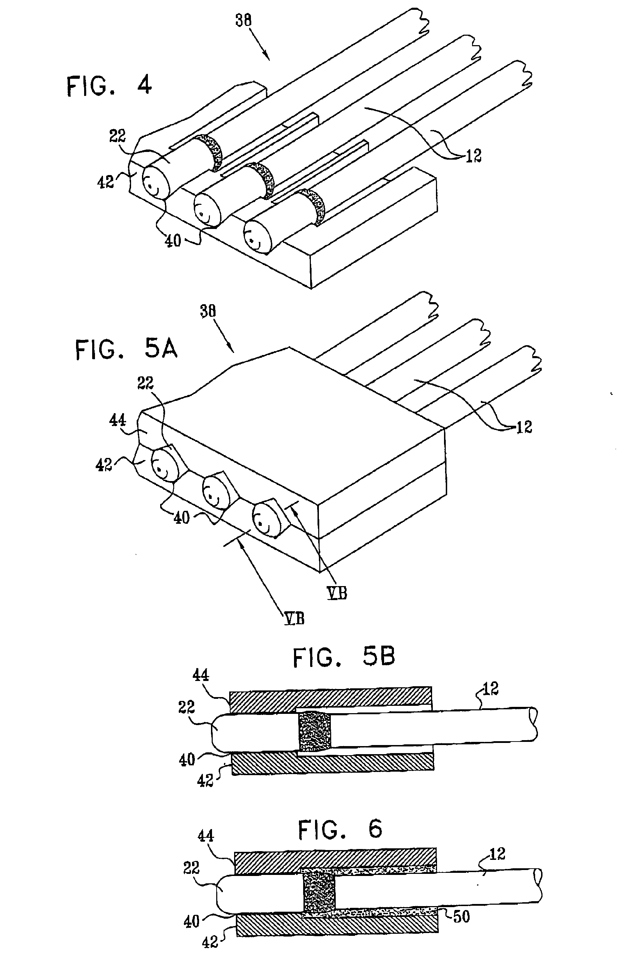

Reference is now made to Figs. 4 & 5A, which illustrate a portion of a linear array 38 of optical fiber cables 12, each prepared in accordance with Figs. 1-3, described hereinabove, constructed and operative in accordance with a preferred embodiment of the present invention. It is noted that although the invention is disclosed with reference to a linear array of optical fibers, it is equally applicable to other configurations of optical fiber arrays, such as circular or rectangular arrays.

As seen in Fig. 4, a plurality of ferrules 22 attached to optical fiber cables 12 are preferably located in aligned V-grooves 40 which are formed in a bottom plate 42. In accordance with a preferred embodiment of the present invention, the ferrules 22 are preferably seated in the V-grooves 40. The ferrules 22 and the attached optical fiber cables 12 are then secured within the fiberoptic array 38 by filling the space between the optical fiber cable 12 and the bottom plate 42 with a suitable filler similar to what is shown hereinbelow with reference to Fig. 6.

Fig 5A shows another preferred embodiment of the present invention. As seen in Fig. 5A, a plurality of ferrules 22 attached to optical fiber cables 12 are preferably located in aligned V-grooves 40 which are formed in mutually facing surfaces of a top plate 44 and a bottom plate 42. In accordance with a preferred embodiment of the present invention, the ferrules 22 are preferably seated in the V-grooves 40. The ferrules 22 and the attached optical fiber cables 12 are then secured within the fiberoptic array 38 by filling the space between the optical fiber cable 12 and the top plate 44 and the bottom plate 42 with a suitable filler as shown hereinbelow with reference to Fig. 6.

In accordance with another preferred embodiment of the present invention, not shown, the top plate 44 and bottom plate 42 may be replaced by a single plate having a plurality of holes bored accurately therethrough to receive the ferrules 22 and the optical fiber cables 12.

Reference is now made to Figs. 5B & 6, which show, in sectional illustration, the ferrule 22 attached to the optical fiber cable 12 and inserted into the V-groove 40 in accordance with a preferred embodiment of the present invention. As seen in Fig. 5B, the ferrule 22 rests in the V-groove 40 formed by the top plate 44 and the bottom plate 42. Fig. 6 shows the filling of the space between the optical fiber cable 12 and the top plate 44 and the bottom plate 42 by an epoxy 50 or other suitable filler to secure the attached optical fiber cable 12 within the fiberoptic array 38.

It will be appreciated by persons skilled in the art that the present invention is not limited by what has been particularly shown and described hereinabove. Rather the scope of the present invention includes both combinations and subcombinations of the various features described hereinabove as well as variations and modifications which would occur to persons skilled in the art upon reading the specification and which are not in the prior art.

## Claims

1. A fiberoptic array, comprising:
a housing;
a plurality of optical fibers; and
a plurality of ferrules fixed within said housing, each of said ferrules ensheathing a terminal segment of an associated one of said optical fibers.

2. A fiberoptic array according to claim 1, wherein said housing comprises a bottom plate, said ferrules being disposed therein.

3. A fiberoptic array according to claim 1, wherein said housing comprises a single plate having a plurality of holes bored therethrough, said ferrules being disposed in said holes.

4. A fiberoptic array according to claim 2, wherein a plurality of V-grooves are formed in said bottom plate, said ferrules being in contact with an associated V-groove.

5. A fiberoptic array according to claim 1, wherein said optical fibers are polarization maintaining optical fibers.

6. A fiberoptic array, comprising:
a housing;
a plurality of polarization maintaining optical fibers; and
a plurality of ferrules fixed within said housing, each of said ferrules ensheathing a terminal segment of an associated one of said polarization maintaining optical fibers.

7. A fiberoptic array according to claim 6, wherein said housing comprises a bottom plate, said ferrules being disposed therein.

8. A fiberoptic array according to claim 6, wherein said housing comprises a single plate having a plurality of holes bored therethrough, said ferrules being disposed in said holes.

9. A fiberoptic array according to claim 7, wherein a plurality of V-grooves are formed in said bottom plate, said ferrules being in contact with an associated V-groove.

10. A method of manufacturing a fiberoptic array, comprising:
inserting terminal portions of a plurality of polarization maintaining optical fibers into associated tip portions of a plurality of ferrules;
fixing an outer wall of each of said polarization maintaining optical fibers to an interior portion of an associated ferrule; and
securing said ferrules in a housing.

11. A method according to claim 10 wherein securing said ferrules is further comprised of:
boring a plurality of holes in a single plate; and
disposing each of said ferrules in an associated hole.
